(19) Europäisches Patentamt
European Patent Office
Office européen des brevets

(11) Publication number: 0 269 385 B1

(12) EUROPEAN PATENT SPECIFICATION

(45) Date of publication of patent specification: 01.07.92

(51) Int. Cl.5: C01B 13/32, C01B 25/32, C01B 35/12

(21) Application number: 87310273.5

(22) Date of filing: 20.11.87

# (54) Process for manufacture of composite oxide.

(30) Priority: 22.11.86 JP 277854/86

(43) Date of publication of application:
01.06.88 Bulletin 88/22

(45) Publication of the grant of the patent:
01.07.92 Bulletin 92/27

(84) Designated Contracting States:
DE FR GB IT NL

(56) References cited:
EP-A- 0 125 507
EP-A- 0 177 198
DE-A- 2 924 915

(73) Proprietor: KABUSHIKI KAISYA ADVANCE
5-7, Nihonbashi Kobuna-cho
Chuo-ku Tokyo 103(JP)

(72) Inventor: Shimoda, Yoshiyuki
3-10-6, Nishinogawa
Komae-shi Tokyo(JP)
Inventor: Ochi, Yasuo
1108 Onda-cho Midori-ku
Yokohama-shi Kanagawa(JP)

(74) Representative: Ellis, John Clifford Holgate et al
MEWBURN ELLIS & CO. 2/3 Cursitor Street
London EC4A 1BO(GB)

EP 0 269 385 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### BACKGROUND OF THE INVENTION

#### 1. Field of the Invention

The present invention relates to a novel process for the manufacture of a composite oxide.

#### 2. Description of the Related Art

Various processes for the manufacture of a composite oxide have been proposed; for example, a non-homogeneous coprecipitation method wherein the composite oxide is produced by hydrolyzing an aqueous solution of a mixture of metallic salts with aqueous ammonia; a homogeneous coprecipitation method wherein urea is employed instead of the aqueous ammonia in the above method; a method comprising kneading metallic hydroxides; a method wherein an oxide of a metal is dipped into an aqueous solution of a salt of a different metal; and a method wherein aqueous ammonia is further added to the aqueous solution of the metallic salt.

In all of the above conventional methods, however, segregation inevitably occurs to cause a non-homogeneous distribution of the components.

In addition to the above methods, an attempt has recently been made, with the intent of realizing a high level of purity and avoiding segregation, to produce the composite oxide material by the method shown in Figure 1. In this method, the composite oxide is obtained by mixing a plurality of metallic alkoxides and then carrying out hydrolysis. More particularly, a plurality of alkoxides or alcoholic solutions of metallic compounds are mixed, water or steam is added to the mixture to adjust the pH thereof, and the whole is stirred at an appropriate temperature, whereby hydrolysis occurs to yield a gel or precipitate which is separated, dried and calcinated to obtain the composite oxide compound. The resulting compound can be purified to a high level by fractionating the starting materials.

In the method, however, there is still a difference in the hydrolyzing and condensation rates of the starting compounds to be mixed, and thus one of the starting compounds is separated as a grain to cause a non-homogenous distribution of atoms. Therefore, in the above conventional methods, it is difficult to avoid segregation.

DE-A-2 924 915 discloses a process for preparing silica-based synthetic materials which include oxides of modifying elements. The process relies on the inclusion of a chelating agent which has a clathrate-forming effect.

Accordingly, as shown above, it is important to solve the technical problem of providing a process for the manufacture of the composite oxide with a high level of purity but without segregation.

### SUMMARY OF INVENTION

Accordingly, the object of the present invention is to provide a novel process for manufacturing the composite oxide with a high level of purity and without segregation.

Other objects and advantages of the present invention will be apparent from the following description.

In accordance with the present invention, there is provided a novel process for the manufacture of a composite oxide, characterized by carrying out, in a non-aqueous medium, a condensation reaction between

an organometallic compound having a structure such that the metallic element present in the compound is bonded to the organic moiety therein via an oxygen atom, and

a protic acid which is capable of carrying out the condensation reaction with the organometallic compound, and is a hydroxide containing an element different from the metallic element contained in said organometallic compound.

Further, the present invention provides the composite oxide prepared by the above process.

### BRIEF EXPLANATION OF THE DRAWINGS

Figure 1 shows a conventional method for the manufacture of the composite oxide by carrying out a hydrolysis of metal alkoxides;

Figure 2 is an X-ray diffraction pattern of the powder material produced in accordance with a conventional method disclosed in Example 1;

Figure 3 is a flow sheet illustrating one embodiment of the process according to the present invention shown in Example 2;
Figure 4 is an X-ray diffraction pattern of the calcinated powder material obtained by calcination from the powder material produced in accordance with the embodiment shown in Figure 3;
Figure 5 is a flow sheet to illustrate another embodiment of the process according to the present invention shown in Example 3;
Figure 6 is an X-ray diffraction pattern of the calcinated powder material obtained by calcination from the powder material produced in accordance with the embodiment shown in Figure 5;
Figure 7 is an X-ray diffraction pattern of the powder material prepared in accordance with still another embodiment of the present process shown in Example 4;
Figure 8 is an X-ray diffraction pattern of the powder material prepared by calcinating the powder material of Figure 7; and,
Figure 9 is a general flow sheet of the present process as shown in Examples 5 to 8.

DESCRIPTION OF THE PREFERRED EMBODIMENTS

In the process of the present invention, any known organometallic compound may be employed, so long as it has a structure wherein the metallic element present in the compound is bonded to the organic moiety therein via an oxygen atom.

The term "metallic element" used herein means an element capable of bonding to the organic moiety via the oxygen atom to form the organometallic compound. More particularly, the metallic element is, for example, beryllium (Be), magnesium (Mg), aluminium (Al), phosphorus (P), calcium (Ca), scandium (Sc), titanium (Ti), vanadium (V), chromium (Cr), manganese (Mn), iron (Fe), cobalt (Co), nickel (Ni), copper (Cu), zinc (Zn), gallium (Ga), arsenic (As), rubidium (Rb), strontium (Sr), yttrium (Y), zirconium (Zr), niobium (Nb), molybdenum (Mo), cadmium (Cd), indium (In), tin (Sn), barium (Ba), lanthanum (La), hafnium (Hf), tantalum (Ta), tungsten (W), mercury (Hg), thallium (Tl), or lead (Pb). The preferable metallic element is Be, Mg, Al, Ca, Ti, V, Fe, Zn, Ga, Sr, Y, Zr, Nb, Sn, Ba, La, Hf, Ta or Pb. More preferably, the metallic element is Ca, Ti, Zr, Fe, Pb, Ba, Sn, Cu or Ta.

The organic moiety present in the organometallic compound is, for example, an aliphatic hydrocarbon group (i.e., alkyl, alkenyl, alkylene or alkenylene group having 1 to 6 carbon atoms).

The typical organometallic compound which can be used in the present invention is a metal alkoxide compound of the formula

$$M(OR)_{\underline{x}}$$

wherein M represents the metallic element, R represents a hydrocarbon group, preferably lower alkyl or alkylene, and $\underline{x}$ is an integer of 2 to 6. Examples of the metal alkoxide compounds will be exemplified hereinafter.

Alkoxides of the metallic element of two valencies are, for example, organomagnesium compounds, such as $Mg(OCH_3)_2$, $Mg(OC_2H_5)_2$, $Mg(OC_3H_7)_2$, $Mg(OC_4H_9)_2$, $Mg(OC_5H_{11})_2$ or $Mg(O_2C_2H_5)$, or similar compounds wherein Ca, Zn, Sr, Ba, Pb, etc., is substituted for Mg in the compounds.

Alkoxides of the metallic element of three valencies are, for example, organoaluminium compounds, such as $Al(OC_2H_5)_3$, $Al(OC_3H_7)_3$ or $Al(OC_4H_9)_3$ or similar compounds wherein Ga, etc., is substituted for Al in the compounds.

Alkoxides of the metallic element of four valencies are, for example, organotitanium compounds, such as $Ti(OCH_3)_4$, $Ti(OC_2H_5)_4$, $Ti(O\text{-iso-}C_3H_7)_4$, $Ti(O\text{-n-}C_3H_7)_4$, $Ti(O\text{-n-}C_4H_9)_4$ or similar compounds wherein Zr, Ge, Sn, Hf, etc., is substituted for Ti in the compounds.

Alkoxides of the metallic element of five valencies are, for example, $Nb(OCH_3)_5$, $Nb(OC_2H_5)_5$, $Nb(O\text{-n-}C_3H_7)_5$, $Nb(O\text{-n-}C_4H_9)_4$ or $Nb(O\text{-t-}C_4H_9)_4$, or similar compounds wherein V, Ta or the like is substituted for Nb in the compounds.

Alkoxides of the metallic element of six valencies are, for example, $Mo(OC_2H_5)_6$, $Mo(O\text{-iso-}C_3H_7)_6$, or $Mo(O\text{-n-}C_4H_9)_6$.

The protic acid used in the present invention is the compound known as Brønsted acid. In the present invention, any known protic acid (Brønsted acid) may be employed, so long as it can take part in the condensation reaction with the above organometallic compound, and is a hydroxide containing an element different from the metallic element contained in the organometallic compound with which it is to be reacted. The above protic acid is, for example, the hydroxide containing the element belonging to Groups III to VI of the Periodic Table, and it is preferable to use a protic acid having the formula

M'(OH)$_{\underline{y}}$

wherein M' is boron (B), phosphorus (P), titanium (Ti), vanadiun (V), chromium (Cr), arsenic (As), tellurium (Te) or lead (Pb), and $\underline{y}$ is an integer of 3 to 6. As examples of the protic acid which may be used in the present invention, there may be mentioned, $H_3BO_3$ , $H_3PO_4$ , $As(OH)_3$ , $Te(OH)_6$ , $H_2CrO_4$ , $H_4TiO_4$ , Pb-$(OH)_2$ , or $H_3VO_4$.

In the process according to the present invention, it is possible to use, as the non-aqueous medium, any solvent which can dissolve the reactants, or any dispersion medium which can disperse the reactants, but the medium must not react with the above organometallic compound or the protic acid. From the viewpoint of operability and availability, it is better to employ an alcohol such as methanol, ethanol, isopropanol, butanol, isoamyl alcohol, ethylene glycol, or propylene glycol. Further, ethers such as dioxane or diethyl ether, esters such as ethyl acetate, a nonpolar solvent such as benzene, or a mixture thereof, may be used.

Prior to the condensation reaction, the organometallic compound is generally dissolved or dispersed in the non-aqueous medium to become a stock liquid. On the other hand, the protic acid is also dissolved or dispersed in the medium to form a separate stock liquid. In some cases, it is not necessary to dilute the reactants with the medium, and it is generally preferable to use lower concentrations of the reactants in the medium. However, if the concentration is too low, the amount of the medium to be used is increased. Conversely, if the concentration is too high, the reaction is difficult to control and the handling is awkward. Therefore, the appropriate concentration is determined by taking into account the above items. The concentration of the reactant is generally not more than 50% by weight, preferably 0.1 - 50% by weight, more preferably 0.1 - 5% by weight.

After one of the above-mentioned stock liquids is added to the other stock liquid, or both stock liquids are added simultaneously to the medium, the whole is maintained for 0 to several tens of hours at 0 ° C to 200 ° C, preferably 10 ° C to 100 ° C, for example, heated under reflux, to complete the reaction. At this state, an anion from the protic acid causes a nucleophilic substitution reaction to the metallic element of the organometallic compound. As a result, the metallic element is bonded via an oxygen atom to a different element stemming from the protic acid. Therefore, the distribution of atoms in the product is uniform and segregation does not occur.

In order to accelerate the above reaction, it is possible to employ an anhydrous acid (i.e., acetic acid, nitric acid or oxalic acid) or base (i.e., pyridine, or amines such as diethyl amine or triethyl amine).

The resulting product can be utilized in the form of a liquid without separation, by applying the same to a substrate and drying, and if desired, calcinating. Further, the resulting product may be filtered off and dried, and if desired, calcinated at an appropriate temperature for an appropriate number of hours to obtain, for example, ceramics with a high level of purity.

Although the mechanism of the condensation reaction as mentioned above is not absolutely clear, the following assumption can be made: The organometallic compound such as the metal alkoxide acts as a protic base (Brønsted base) and causes an acid-base reaction with the protic acid, such as a mineral acid having an OH group, in the non-aqueous medium to yield the composite oxide. More particularly, the protic acid liberates a proton to provide an anion in the non-aqueous medium. The anion nucleophilically attacks the metallic element of the organometallic compound, and causes the nucleophilic substitution reaction, to cause the bonding of the metallic element to the different element through the oxygen atom. However, the organometallic compounds used should not react with each other, and the protic acids should not react with each other, and therefore, the acid-base reaction should proceed exclusively, and thus the composite oxide having a uniform distribution of atoms can be produced. The reaction can be schematically shown as follows:

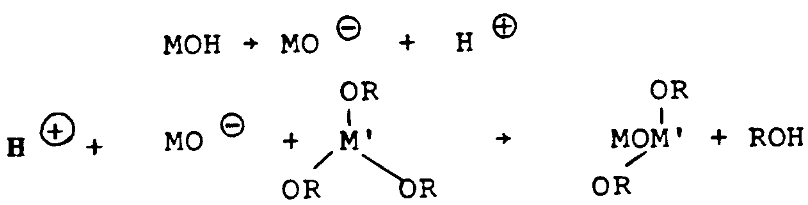

wherein M′ is the metallic element, M is the different element, and R is, for example, alkyl or carbonyl.

Typical reaction formulae are as follows:

1) $Al(O\text{-}iso\text{-}C_3H_7)_3 + H_3PO_4 \rightarrow AlPO_4 + 3iso\text{-}C_3H_7OH$

2) $3Zn(OC_2H_5)_2 + Te(OH)_6 \rightarrow Zn_3TeO_6 + 6C_2H_5OH$

3) $Ca(OC_2H_5)_2 + Te(OH)_6 \rightarrow CaTeO_4 + 2C_2H_5OH + 2H_2O$

4) $AsO(O\text{-}iso\text{-}C_3H_7)_3 + H_3BO_3 \rightarrow AsBO_4 + 3iso\text{-}C_3H_7OH$

5) $PO(OC_2H_5)_3 + H_3BO_3 \rightarrow BPO_4 + 3C_2H_5OH$

6) $2ZrO(OC_2H_5)_2 + 2H_3PO_4 \rightarrow Zr_2O(PO_4)_2 + 4C_2H_5OH + H_2O$

As explained above, the composite oxide formed in accordance with the present process contains i) the metallic element stemming from the organometallic compound, ii) the oxygen atom stemming from the protic acid, and iii) an element other than hydrogen and oxygen, and different from the metallic element, stemming from the protic acid.

The composite oxide obtained in accordance with the present process comprises predominantly amorphous materials, or a mixture of a major part of amorphous materials and a minor part of crystalline materials. However, a small amount of heat can bring about a crystalline product, and further, an amorphous product can be produced by an appropriate selection of the starting materials.

The distribution of the components in the composite oxide produced by the present process is uniform, and no difference in chemical composition can be observed throughout the whole product.

The process of the present invention brings the following various advantages:

1) In the present process, it is possible to employ a higher concentration of the reactants in the medium in comparison with the conventional methods, and therefore, the proportion of the medium to the product can be reduced.

2) The organometallic compound used as the starting material can be given a high level of purity by fractionating, and therefore, a high level of purity of the resulting composite oxide can be obtained.

3) According to the present process, the composite oxide is obtained by the selective reaction, and therefore, the components are uniformly distributed and segregation does not occur. Thus, the properties (i.e., electronic or mechanical properties) of the product can be enhanced, and further, an increased yield can be expected.

The composite oxide obtained by the process in accordance with the present invention may be utilized for catalytic, electronic or bio-materials, or mechanical materials (as calcinated materials).

## EXAMPLES

The present invention now will be further illustrated by, but is by no means limited to, the following Examples.

In the following Examples, analyses of the properties were carried out as follows, unless otherwise indicated:

### 1. X-ray Diffraction

The crystal structure of the products including composite oxides according to the present invention was confirmed by analyzing the structure by an X-ray diffraction method. An X-ray diffraction analyzer, RAD-IIB (Rigaku Denki K.K.) was employed to determine the diffraction intensity with Cu $K\alpha$ radiations at 40 kV and 20 mA, and to identify the crystal structure.

### 2. Distribution of Components

According to a current method, homogeneity of the distribution of constituting components (variability of composition) was evaluated on the basis of observation of a minute area (less than 100 Å) by an electron microscope, and on the basis of composition analyses of several points by a Electron probe Micro Analyzer (EPMA), etc. In the following Examples, a transmission electron microscope, JEM-100SX (Nippon Denshi K,K.), and an energy dispersive X-ray spectroscope (EDX), Q-200J (Link Co., Ltd.), were employed for observation of the microstructures, and a composition analysis of minute areas.

### Example 1

This example was obtained for comparison purposes, and does not illustrate the embodiment of the present invention.

To 100 ml of ethanol, 0.05 mole of metallic calcium was added, and the whole was heated under reflux,

until the reaction of calcium was completed and diethoxy calcium was obtained. Then, 0.03 mole of triethyl phosphate was added thereto and heated under reflux for 1 hour. While heating, a solution of a mixture of 0.19 mole of ion-exchanged water and 50 ml of ethanol was slowly added dropwise thereto. After the addition was completed, the whole was heated under reflux for 3 hours, cooled to room temperature, filtered, and dried to obtain a white powder material.

X-ray diffraction showed that the resulting powder was calcium hydroxide, and no phosphorous was detected by EPMA. The X-ray diffraction pattern of the product in this example is shown in Figure 2.

Example 2

This example illustrates the production of apatite according to the present invention.

To 100 ml of ethanol, 0.05 mole of metallic calcium was added, and the whole was heated under reflux until the reaction of calcium was completed and diethoxy calcium was obtained.

While heating under reflux, a solution of the mixture of 0.03 mole of phosphoric acid and 50 ml of ethanol was slowly added dropwise thereto, and after the addition was completed, the whole was heated under reflux for 3 hours, cooled to room temperature, filtered, and dried to obtain a white powder material.

Figure 3 is a flow sheet illustrating the above production, and Figure 4 is an X-ray diffraction pattern of the calcinated powder material obtained by calcination of the resulting powder material at 560 °C for 1 hour.

From the patterns, it was found that the powder material before calcination was amorphous, whereas the calcined material was a crystalline hydroxy apatite.

Example 3

This example illustrates the production of tricalcium phosphate (TCP) according to the present invention.

To 100 ml of ethylene glycol, 0.05 mole of metallic calcium was added and the whole was stirred at 100 °C until the reaction of calcium was completed and calcium ethylene glycoxide was obtained.

While maintaining the resulting solution of ethylene glycoxide at 100 °C, a solution of the mixture of 0.03 mole of phosphoric acid and 50 ml of ethanol was slowly added dropwise thereto while stirring, and after the addition was completed, the whole was maintained at 100 °C for 3 hours with stirring, cooled to room temperature, filtered, and dried to obtain a powder material.

Figure 5 is a flow sheet illustrating the above production, and Figure 6 is an X-ray diffraction pattern of the calcinated powder material obtained by calcination of the resulting powder material at 560 °C for 1 hour.

From the patterns, it was found that the powder material before calcination was amorphous, whereas the calcinated material was a crystalline phase of $Ca_3(PO_4)_2$.

Example 4

This example illustrates the production of apatite in accordance with the present invention.

As in Example 3, calcium glycoxide was prepared, and a solution of a mixture of phosphoric acid and ethanol was added dropwise thereto. A powder material was obtained after filtration and drying.

Figure 7 is an X-ray diffraction pattern of the above powder material before calcination, and Figure 8 is an X-ray diffraction pattern of the calcinated material thereof (at 560 °C for 1 hour).

The patterns show that the material before calcination was amorphous, whereas the calcinated material was a crystalline phase of $Ca_5(PO_4)_3OH$.

Example 5

This example illustrates the production of $CaTeO_4$ in accordance with the present invention.

As in Example 2, 100 ml of solution of calcium glycoxide (0.01 mole/l) was prepared, and to this solution, 0.001 mole of telluric acid diluted with 50 ml of ethylene glycol was slowly added dropwise in such a manner that the reaction temperature was not lowered. After the addition was completed, the whole was aged by heating at 100 °C under reflux for 1 hour and then cooled to room temperature. The precipitate formed was filtered and dried, and the product was further calcinated at 1,000 °C for 1 hour to obtain $CaTeO_4$.

Example 6

This example illustrates the production of $Zn_3TeO_6$ in accordance with the present invention.

0.001 mole of commercially available $Zn(OC_2H_5)_2$ was added to 100 ml of ethanol, and the mixture was heated under reflux for several hours in a nitrogen stream, to ensure uniformity. Then, 0.001 mole of telluric acid was diluted with 50 ml of ethanol and added slowly dropwise to the solution of $Zn(OC_2H_5)_2$. After the addition, refluxing was continued for 3 hours and the resulting product filtered, dried, and calcinated at 1,000°C for 1 hour to obtain $Zn_3TeO_6$.

Example 7

This example illustrates the production of $AsBO_4$ in accordance with the present invention.

To 100 ml of isopropanol was added 0.001 mole of $As(O{\bullet}C_3H_7)_3$, and the whole heated under reflux for several hours. To this mixture, a solution of 0.001 mole of boric acid diluted with 50 ml of isopropanol was added dropwise, then 0.0001 mole of pyridine was added and the whole heated under reflux for 12 hours. The resulting product was filtered, dried, and calcinated at 1,000°C for 1 hour to obtain $AsBO_4$.

Example 8

This example illustrates the production of $BPO_4$ in accordance with the present invention.

In 100 ml of ethanol was dissolved 0.001 mole of commercially available $PO(OC_2H_5)_3$, and to this solution, 0.01 mole of $H_3BO_3$ diluted with ethanol was slowly added dropwise. After the addition, 0.001 mole of pyridine was added and the whole heated under reflux for 12 hours. The resulting precipitate was filtered, dried, and calcined at 1,000°C for 1 hour to obtain $BPO_4$.

Example 9

This example illustrates the production of $Zr_2O(PO_4)_2$ in accordance with the present invention.

To 1 ℓ of propanol was added 0.01 mole of commercially available $ZrO(O\text{-iso-}C_3H_7)_4$ and the whole heated under reflux for several hours. To this mixture, 0.01 mole of phosphoric acid diluted with isopropanol was slowly added dropwise, and after heating under reflux for several hours, the resulting precipitate was filtered, dried, and calcinated at 1,000°C for 1 hour to obtain $Zr_2O(PO_4)_2$.

**Claims**

**1.** A process for the manufacture of a composite oxide, characterized by carrying out, in a non-aqueous medium, a condensation reaction between

an organometallic compound having a structure such that a metallic element present in said compound is bonded to an organic moiety therein via an oxygen atom, and

a protio acid other than silicic acid which is capable of carrying out a condensation reaction with said organometallic compound, and is a hydroxide containing an element different from said metallic element contained in said organometallic compound.

**2.** A process according to claim 1, wherein the composite oxide formed contains the metallic element stemming from said organometallic compound, the oxygen atom stemming from protic acid, and the element stemming from protic acid.

**3.** A process according to claim 1 or claim 2, wherein the condensation reaction is an acid-base reaction.

**4.** A process according to any one of claims 1 to 3, wherein the metallic element present in the organometallic compound is an element capable of bonding to the organic moiety via the oxygen atom to form an organometallic compound.

**5.** A process according to claim 4, wherein the metallic element is selectec from beryllium (Be), magnesium (Mg), aluminium (Al), phosphorus (P), calcium (Ca), scandium (Sc), titanium (Ti), vanadium (V), chromium (Cr), manganese (Mn), iron (Fe), cobalt (Co), nickel (Ni), copper (Cu), zinc (Zn), gallium (Ga), arsenic (As), rubidium (Rb), strontium (Sr), yttrium (Y), zirconium (Zr), niobium (Nb), molybdenum (Mo), cadmium (Cd), indium (In), tin (Sn), barium (Ba), lanthanum (La), hafnium (Hf), tantalum (Ta), tungsten (W), mercury (Hg), thallium (Tl), and lead (Pb).

6. A process according to any one of claims 1 to 5, wherein the organometallic compound is a metal alkoxide.

7. A process according to claim 1, wherein the protic acid is a hydroxide containing an element belonging to Groups III to VI of the Periodic Table.

8. A process according to claim 7, wherein the protic acid is a hydroxide having the formula

$M'(OH)_{\underline{y}}$

wherein M' is boron (B), phosphorus (P), titanium (Ti), vanadium (V), chromium (Cr), arsenic (As), tellurium (Te) or lead (Pb), and y is an integer of 3 to 6.

9. A process according to claim 1, wherein the non-aqueous medium is an organic solvent or dispersion medium.

10. A process according to claim 9, wherein the solvent is an alcohol.

**Revendications**

1. Procédé de fabrication d'un oxyde composite caractérisé en ce qu'on réalise, dans un agent non-aqueux, une réaction de condensation entre un composé organométallique ayant une structure telle qu'un élément métallique présent dans ce composé est lié, par l'intermédiaire d'un atome d'oxygène, à une partie organique dans ce composé, et un acide protique autre que l'acide silicique qui est capable de produire une réaction de condensation avec le composé organométallique et qui est un hydroxyde contenant un élément différent de l'élément métallique contenu dans le composé organométallique.

2. Procédé suivant la revendication 1 caractérisé en ce que l'oxyde composite formé contient l'élément métallique provenant du composé organométallique, l'atome d'oxygène provenant de l'acide protique et l'élément provenant de l'acide protique.

3. Procédé suivant l'une quelconque des revendications 1 ou 2 caractérisé en ce que la réaction de condensation est une réaction acide-base.

4. Procédé suivant l'une quelconque des revendications 1 à 3 caractérisé en ce que l'élément métallique présent dans le composé organométallique est un élément capable de se lier, par l'intermédiaire de l'atome d'oxygène, à la partie organique, afin de former un composé organométallique.

5. Procédé suivant la revendication 4 caractérisé en ce que l'élément métallique est choisi parmi le béryllium (Be), le magnésium (Mg), l'aluminium (Al), le phosphore (P), le calcium (Ca), le scandium (Sc), le titane (Ti), le vanadium (V), le chrome (Cr), le manganèse (Mn), le fer (Fe), le cobalt (Co), le nickel (Ni), le cuivre (Cu), le zinc (Zn), le gallium (Ga), l'arsenic (As), le rubidium (Rb), le strontium (Sr), l'yttrium (Y), le zirconium (Zr), le niobium (Nb), le molybdène (Mo), le cadmium (Cd), l'indium (In), l'étain (Sn), le baryum (Ba), le lanthane (La), l'hafnium (Hf), le tantale (Ta), le tungstène (W), le mercure (Hg), le thallium (Tl), et le plomb (Pb).

6. Procédé suivant l'une quelconque des revendications 1 à 5 caractérisé en ce que le composé organométallique est un alcoolate métallique.

7. Procédé suivant la revendication 1 caractérisé en ce que l'acide protique est un hydroxyde contenant un élément appartenant aux groupes III à VI de la Table de Classification Périodique.

8. Procédé suivant la revendication 7 caractérisé en ce que l'acide protique est un hydroxyde ayant la formule $M'(OH)_y$ dans laquelle M' est le bore (B), le phosphore (P), le titane (Ti), le vanadium (V), le chrome (Cr), l'arsenic (As), le tellure (Te) ou le plomb (Pb), et y est un nombre entier de 3 à 6.

9. Procédé suivant la revendication 1 caractérisé en ce que l'agent non-aqueux est un solvant organique ou un agent de dispersion.

**10.** Procédé suivant la revendication 9 caractérisé en ce que le solvant est un alcool.

**Patentansprüche**

**1.** Verfahren zur Herstellung eines Mischoxides, **gekennzeichnet durch** die Durchführung einer Kondensationsreaktion in einem nicht-wäßrigen Medium zwischen
einer organometallischen Verbindung, die eine solche Struktur besitzt, daß ein in der Verbindung vorhandenes metallisches Element über ein Sauerstoffatom an einen organischen Anteil in der Verbindung gebunden ist, und einer
anderen Brønsted-Säure als Kieselsäure, die in der Lage ist, eine Kondensationsreaktion mit der organometallischen Verbindung durchzuführen, und bei der es sich um ein Hydroxid handelt, das ein Element enthält, welches sich von dem in der organometallischen Verbindung enthaltenen metallischen Element unterscheidet.

**2.** Verfahren nach Anspruch 1, bei dem das hergestellte Mischoxid das von der organometallischen Verbindung stammende metallische Element, das von der Brønsted-Säure stammende Sauerstoffatom und das von der Brønsted-Säure stammende Element enthält.

**3.** Verfahren nach Anspruch 1 oder 2, bei dem die Kondensationsreaktion eine Säure-Base-Reaktion ist.

**4.** Verfahren nach einem der Ansprüche 1 bis 3, bei dem das in der organometallischen Verbindung vorhandene metallische Element ein Element ist, das in der Lage ist, sich zur Ausbildung einer organometallischen Verbindung über das Sauerstoffatom mit dem organischen Anteil zu verbinden.

**5.** Verfahren nach Anspruch 4, bei dem das metallische Element ausgewählt ist aus Beryllium (Be), Magnesium (Mg), Aluminium (Al), Phosphor (P), Kalzium (Ca), Scandium (Sc), Titan (Ti), Vanadium (V), Chrom (Cr), Mangan (Mn), Eisen (Fe), Kobalt (Co), Nickel (Ni), Kupfer (Cu), Zink (Zn), Gallium (Ga), Arsen (As), Rubidium (Rb), Strontium (Sr), Yttrium (Y), Zirkon (Zr), Niob (Nb), Molybdän (Mo), Kadmium (Cd), Indium (In), Zinn (Sn), Barium (Ba), Lanthan (La), Hafnium (Hf), Tantal (Ta), Wolfram (W), Quecksilber (Hg), Thallium (Tl) und Blei (Pb).

**6.** Verfahren nach einem der Ansprüche 1 bis 5, bei dem die organometallische Verbindung ein Metallalkoxid ist.

**7.** Verfahren nach Anspruch 1, bei dem die Brønsted-Säure ein Hydroxid ist, das ein Element enthält, welches zu den Gruppen III bis VI des Periodensystems gehört.

**8.** Verfahren nach Anspruch 7, bei dem die Brønsted-Säure ein Hydroxid ist, das die Formel

$M' (OH)_y$

aufweist, wobei M' Bor (B), Phosphor (P), Titan (Ti), Vanadium (V), Chrom (Cr), Arsen (As), Tellur (Te) oder Blei (Pb) und y eine ganze Zahl von 3 bis 6 ist.

**9.** Verfahren nach Anspruch 1, bei dem das nicht-wäßrige Medium ein organisches Lösungsmittel oder ein Dispersionsmedium ist.

**10.** Verfahren nach Anspruch 9, bei dem das Lösungsmittel ein Alkohol ist.

Fig. 1

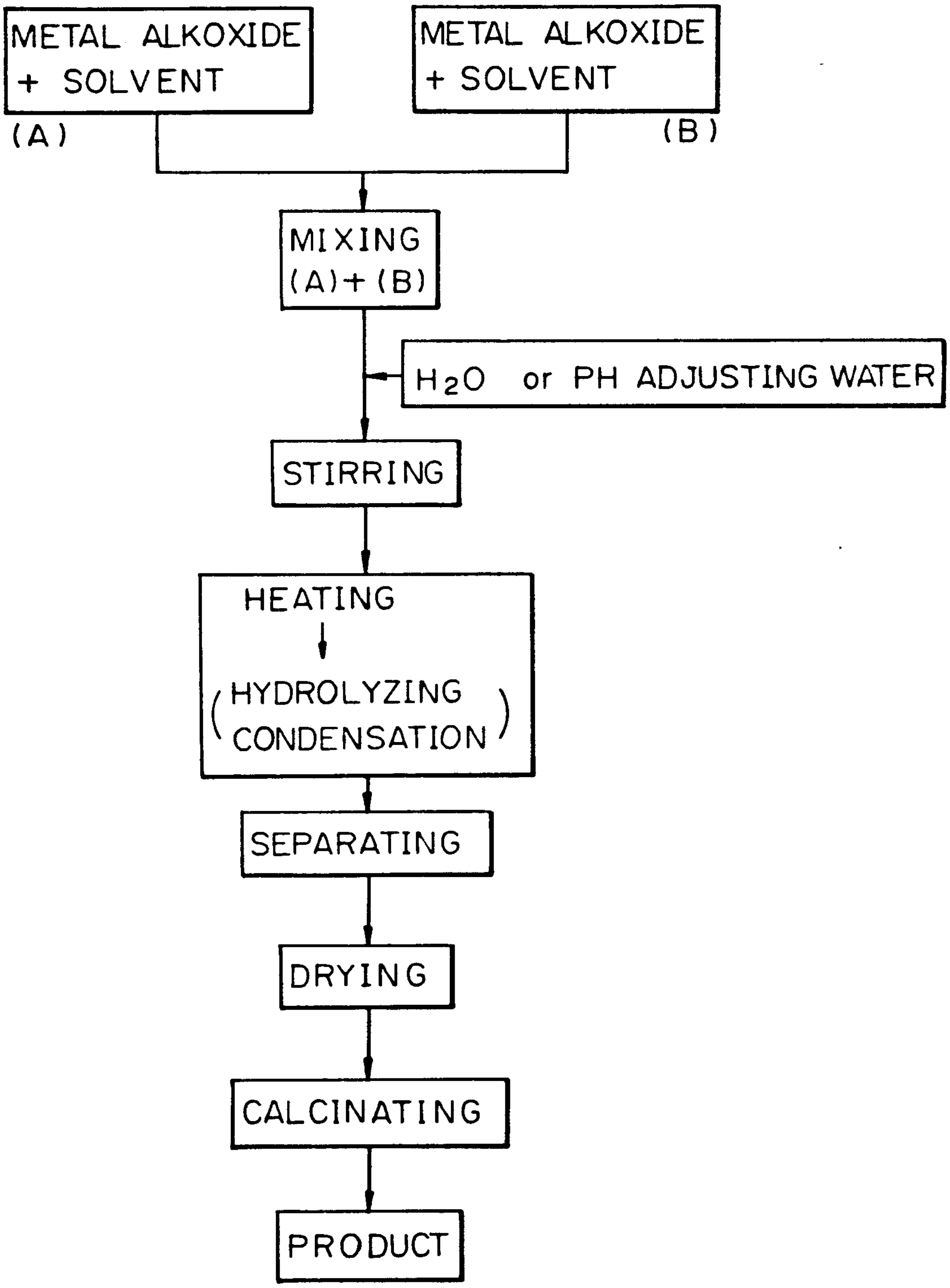
METAL ALKOXIDE
+ SOLVENT
(A)
METAL ALKOXIDE
+ SOLVENT
(B)
MIXING
(A)+(B)
$H_2O$ or PH ADJUSTING WATER
STIRRING
HEATING
(HYDROLYZING
CONDENSATION)
SEPARATING
DRYING
CALCINATING
PRODUCT

Fig. 2

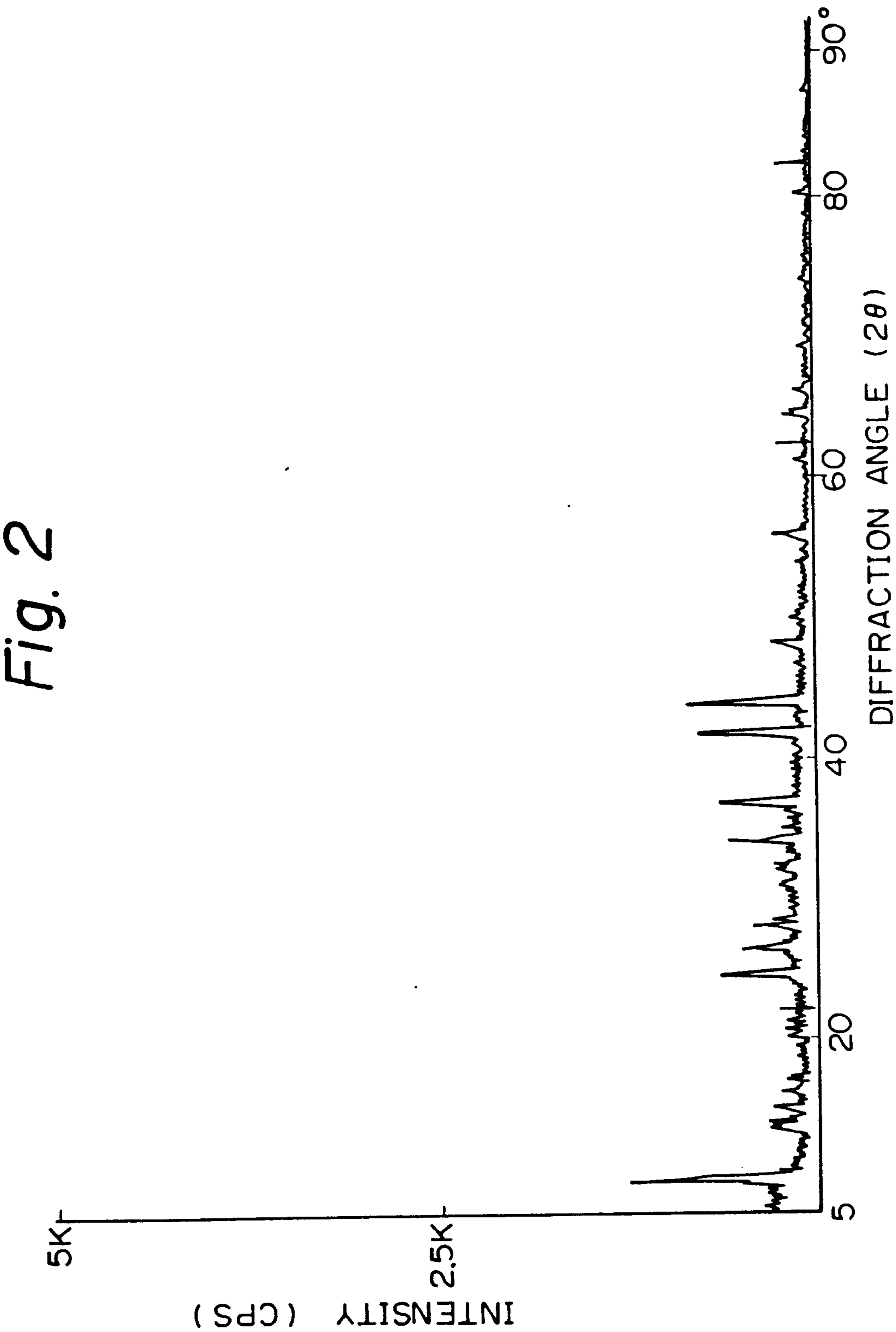

*Fig. 3*

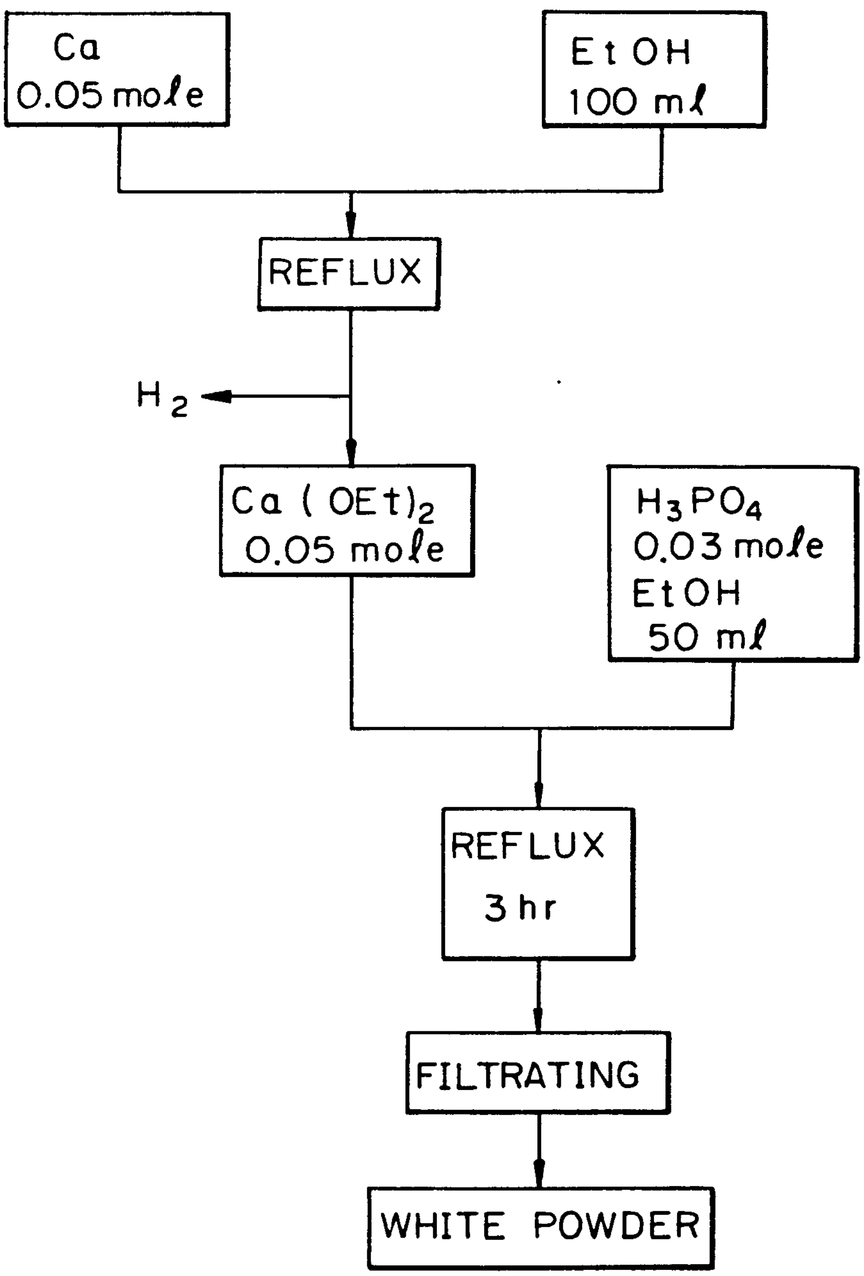
Ca
0.05 mole
EtOH
100 ml
REFLUX
H2
Ca(OEt)2
0.05 mole
H3PO4
0.03 mole
EtOH
50 ml
REFLUX
3 hr
FILTRATING
WHITE POWDER

Fig. 4

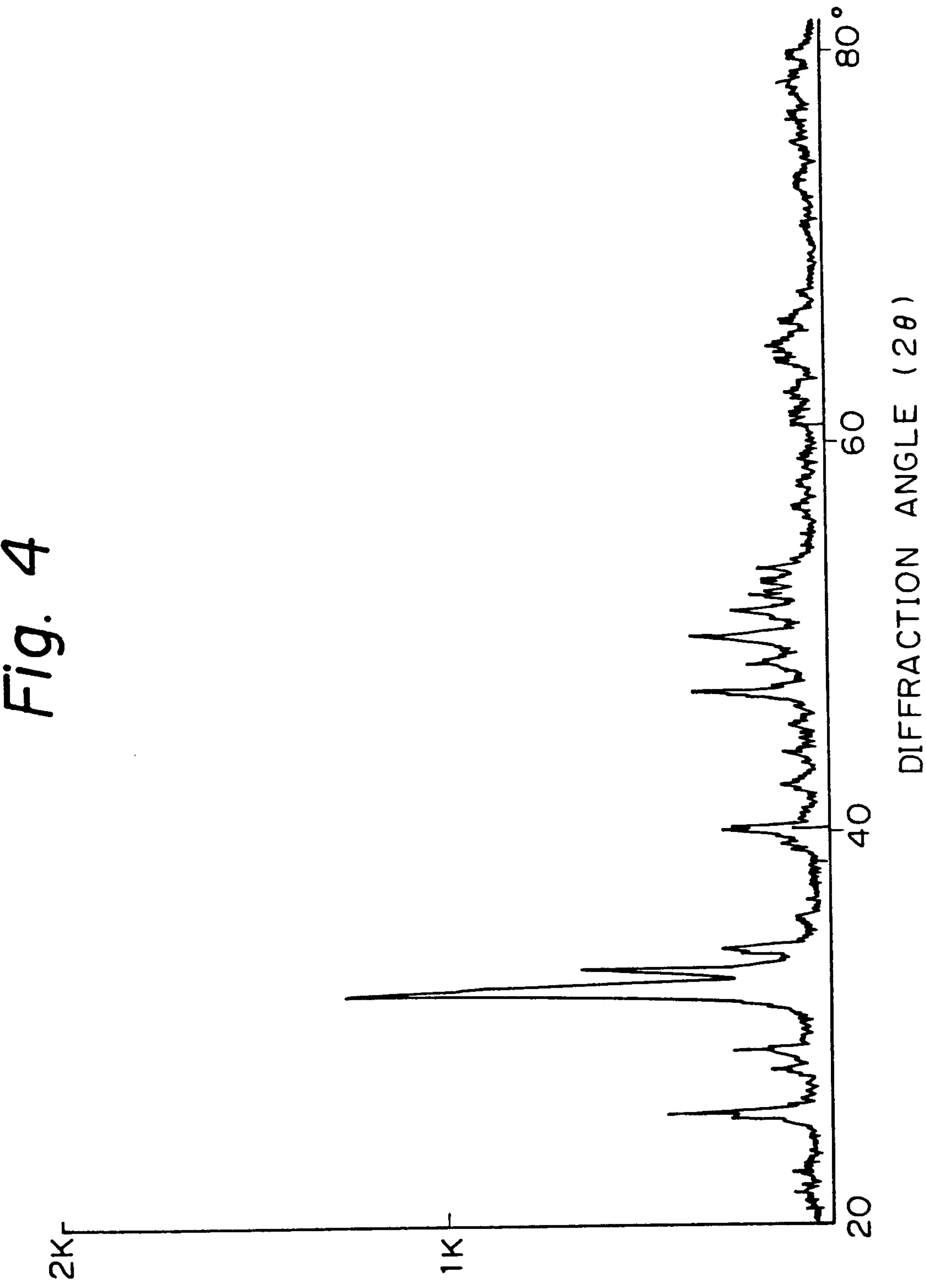

Fig. 5

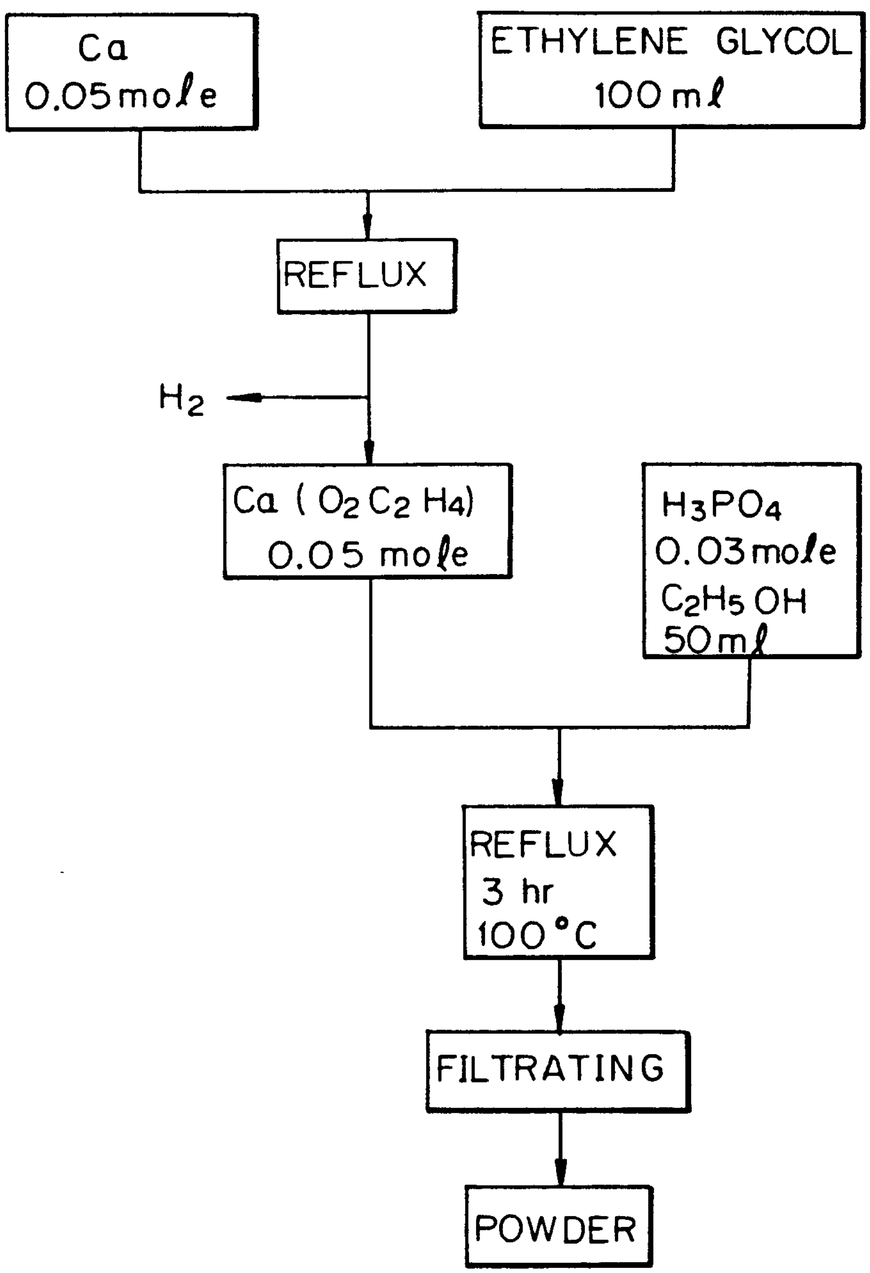
Ca
0.05 mole
ETHYLENE GLYCOL
100 ml
REFLUX
H2
Ca (O2 C2 H4)
0.05 mole
H3PO4
0.03 mole
C2H5 OH
50 ml
REFLUX
3 hr
100 °C
FILTRATING
POWDER

Fig. 6

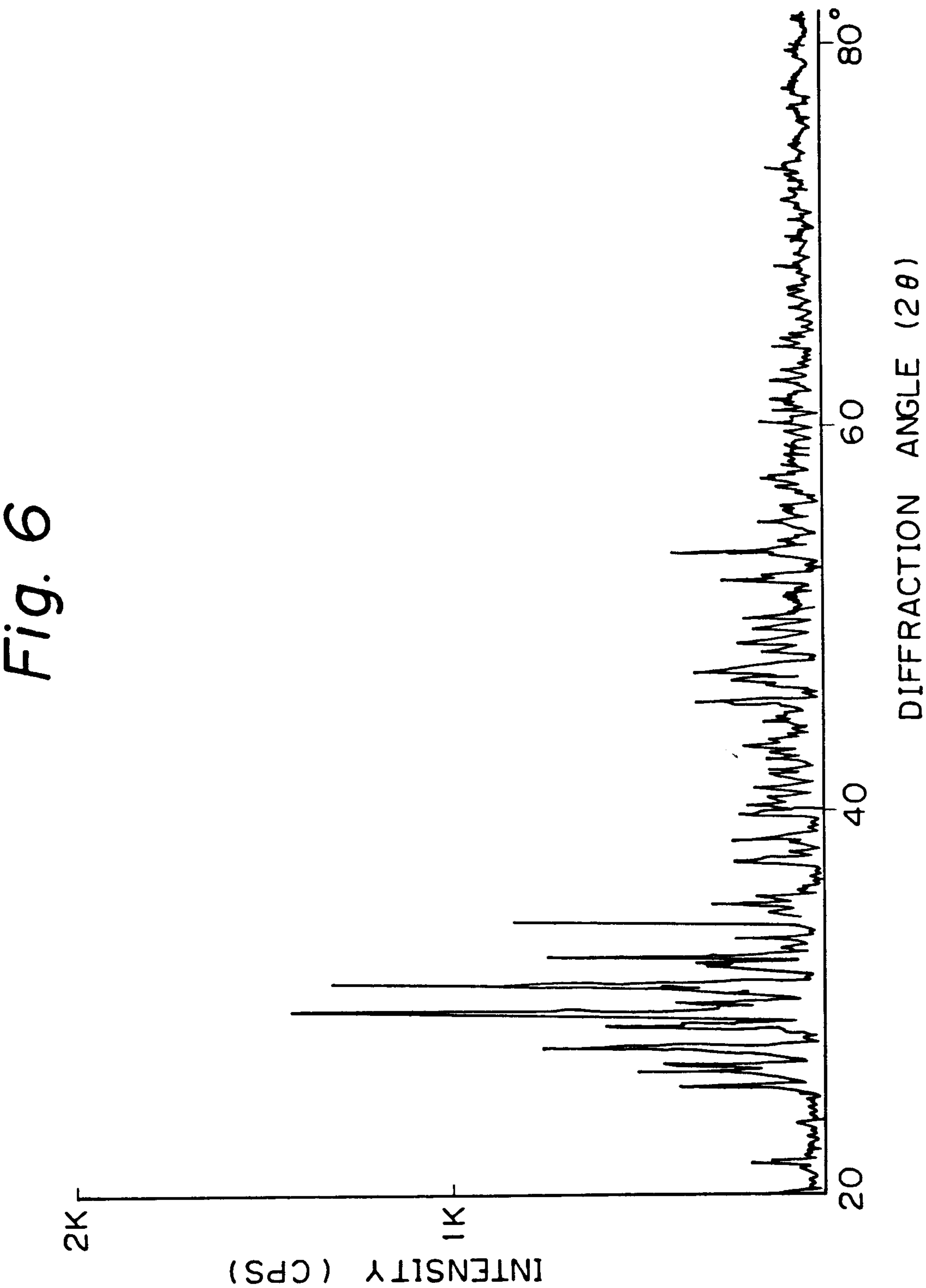

Fig. 7

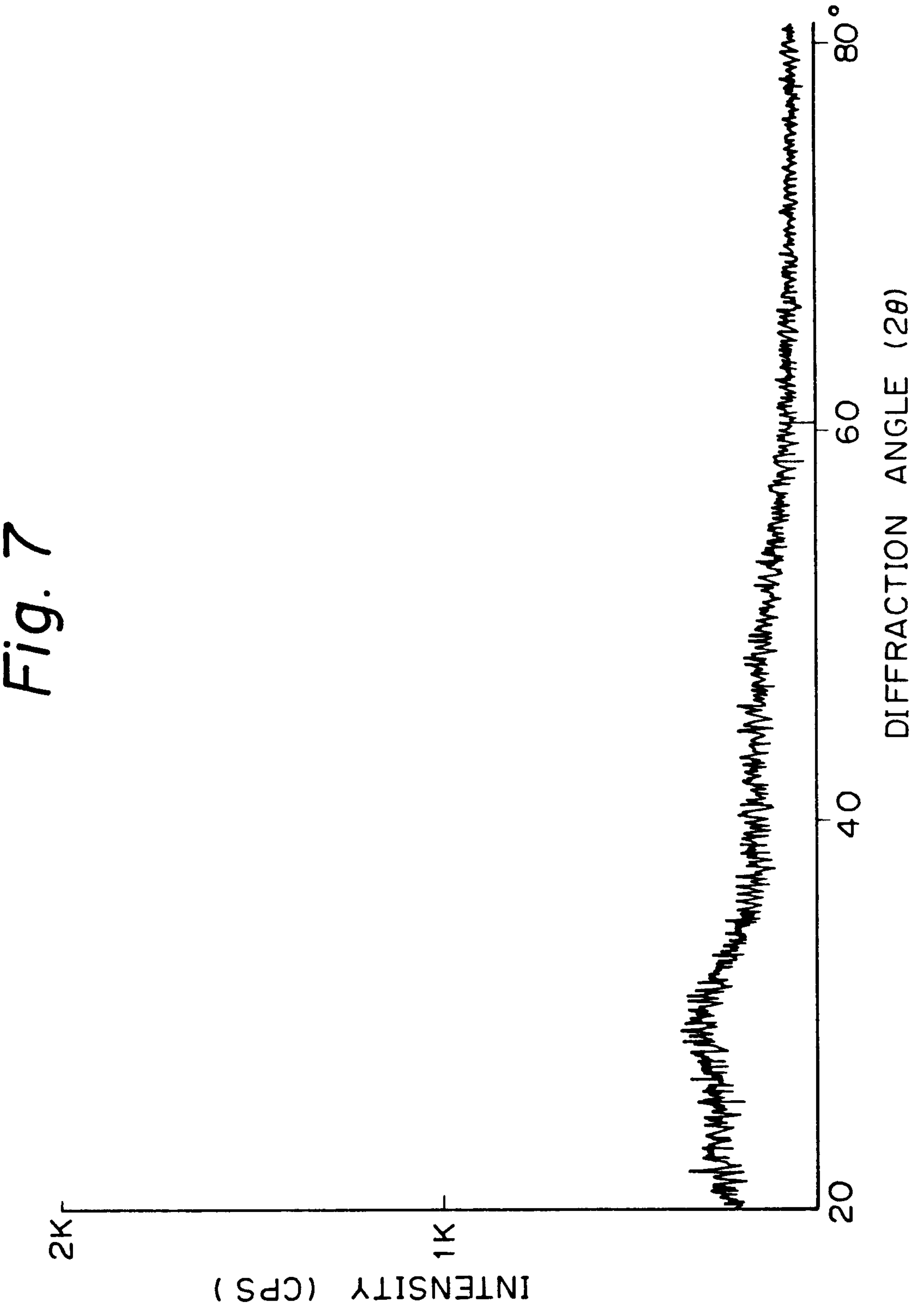

Fig. 8

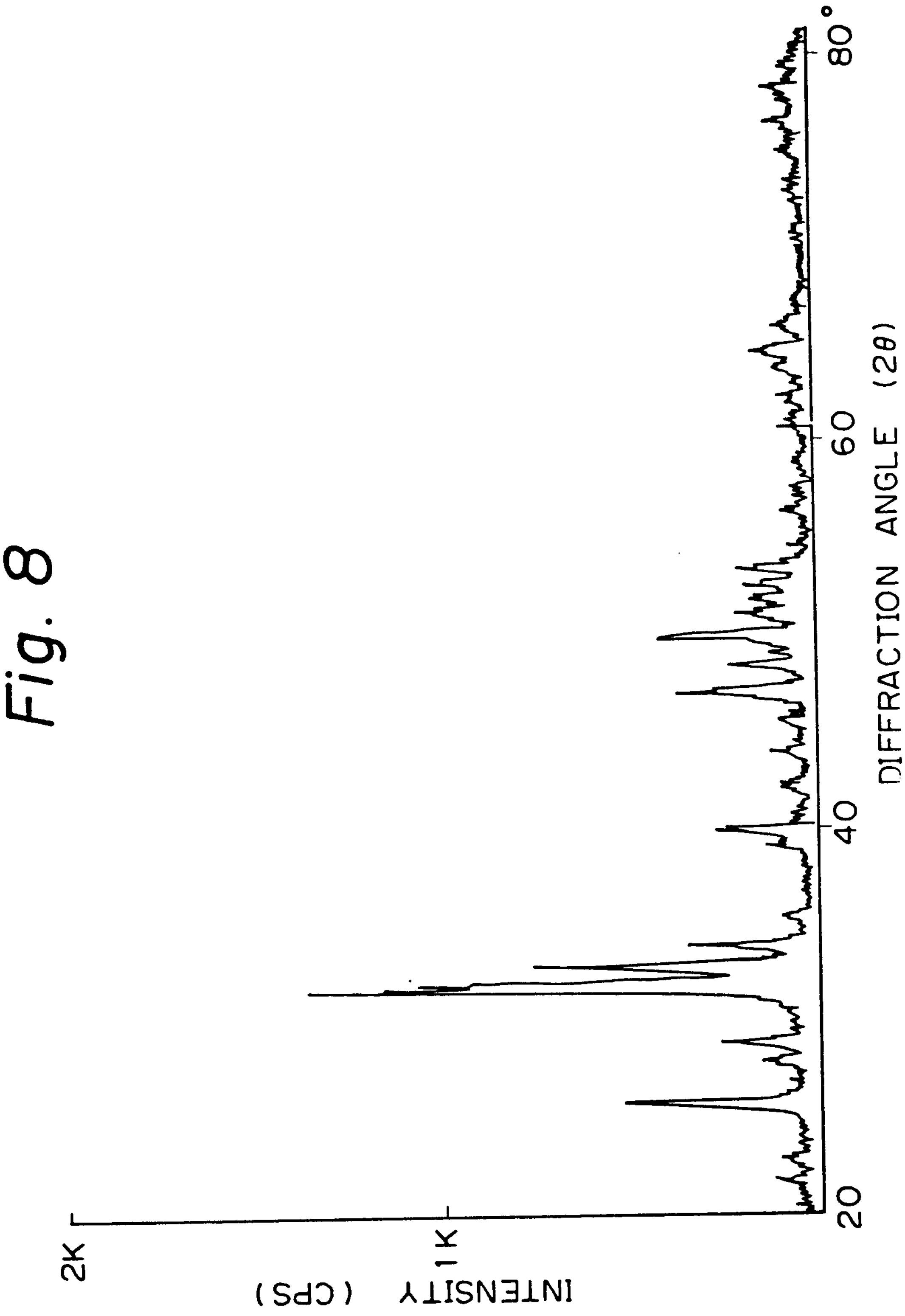

*Fig. 9*

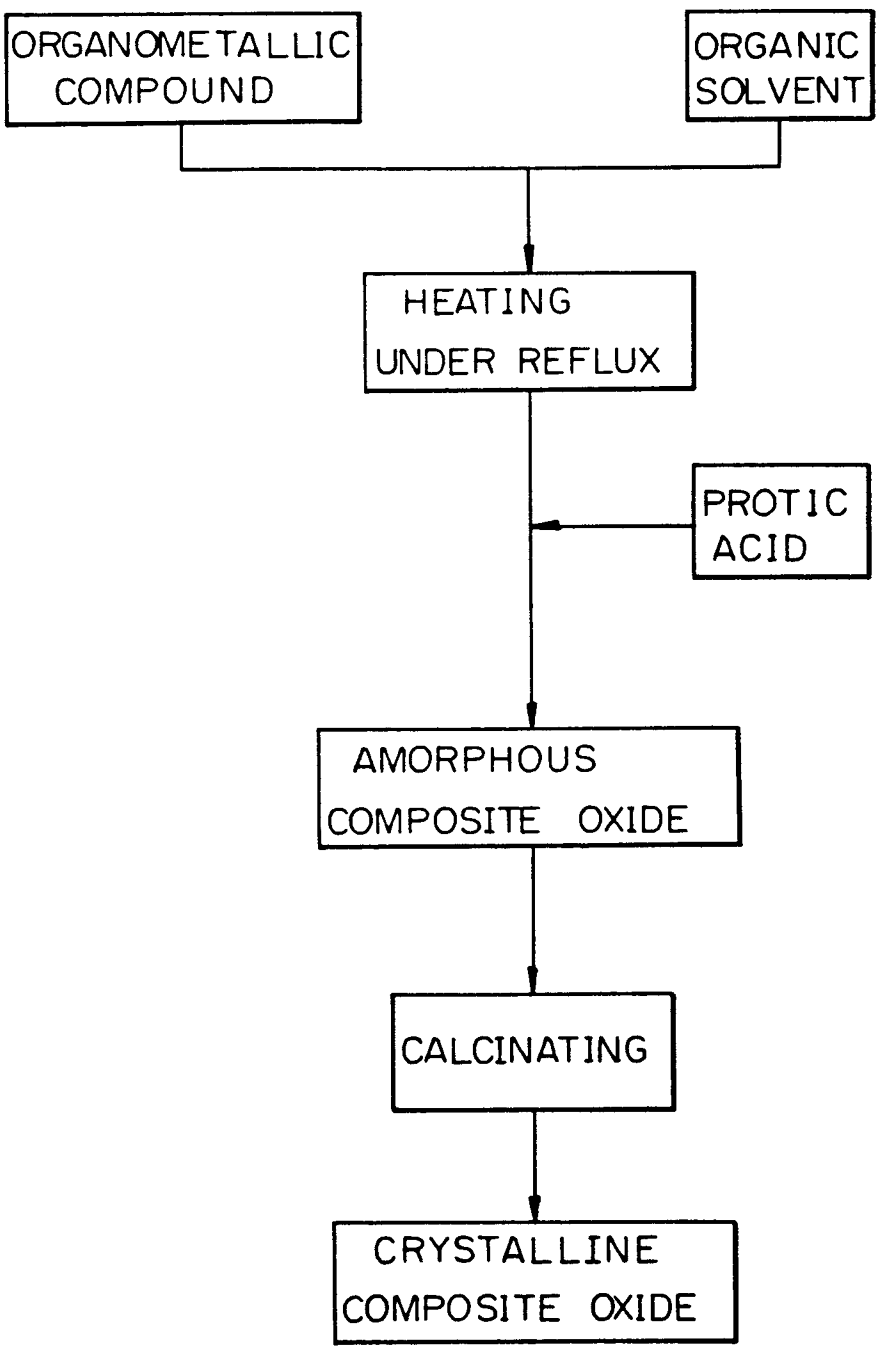
ORGANOMETALLIC COMPOUND
ORGANIC SOLVENT
HEATING UNDER REFLUX
PROTIC ACID
AMORPHOUS COMPOSITE OXIDE
CALCINATING
CRYSTALLINE COMPOSITE OXIDE